# EUROPÄISCHE PATENTSCHRIFT

(11) **EP 4 293 818 B1**
(45) Veröffentlichungstag und Bekanntmachung des Hinweises auf die Patenterteilung: **11.09.2024**
(21) Anmeldenummer: 22178924.1
(22) Anmeldetag: 14.06.2022
(51) Int. Cl.: H01Q 1/22, H01Q 13/02, H01Q 19/12

(54) **ANTENNENANORDNUNG ZUM ABSTRAHLEN EINES HOCHFREQUENZ-MESSSIGNALS EINES MESSSENSORS**
ANTENNA ARRANGEMENT FOR EMITTING A HIGH-FREQUENCY MEASUREMENT SIGNAL OF A MEASURING SENSOR
ENSEMBLE ANTENNE PERMETTANT D'ÉMETTRE UN SIGNAL DE MESURE HAUTE FRÉQUENCE D'UN CAPTEUR DE MESURE

(43) Veröffentlichungstag der Anmeldung: 20.12.2023
(73) Patentinhaber: VEGA Grieshaber KG, 77709 Wolfach (DE)
(72) Erfinder: MÜLLER, Christoph, 77728 Oppenau (DE); WEINZIERLE, Christian, 77709 Wolfach (DE); WÄLDE, Steffen, 78078 Niedereschach (DE)
(74) Vertreter: Maiwald GmbH

(56) Entgegenhaltungen:
- WO-A1-90/13927
- DE-A1- 10 057 441
- DE-A1- 102019 104 682
- DE-A1- 19 950 429
- US-A- 3 530 481
- US-A1- 2007 008 212

## Beschreibung

### Gebiet der Erfindung

Die Erfindung betrifft die Antennenanordnung, eingerichtet zum Abstrahlen eines Hochfrequenz-Messsignals eines Messsensors, ein Messgerät, die Verwendung einer Antennenanordnung zum Aussenden eines Hochfrequenz-Messsignals und/oder Empfangen eines reflektierten Messsignals zur Bestimmung eines Füllstands, eines Grenzstands oder eines Drucks, die Verwendung eines Messgeräts zur Füllstandmessung, Grenzstandmessung oder Druckmessung in einer Prozessanlage und ein Verfahren zum Herstellen einer Antennenanordnung, eingerichtet zum Abstrahlen eines Hochfrequenz-Messsignals eines Messsensors.

### Technischer Hintergrund

Radargeräte werden häufig als Feldgeräte in der Füllstand-, Grenzstand- und Druckmesstechnik bzw. der Fertigungsautomatisierung eingesetzt. Dabei wird ein Messstrahl aus einem Erregerelement bzw. einer Signalquelle der Radargeräte durch eine Sende- und/oder Empfangseinheit abgestrahlt. Der Messstrahl kann beispielsweise mittels eines starren metallischen Hohlleiters von der Signalquelle an die Sende- und/oder Empfangseinheit übertragen werden.

DE 10 2019 104682 A1 beschreibt ein Radar-basiertes Füllstandmessgerät zur Messung eines Füllstands eines in einem Behälter befindlichen Füllgutes, das eine Antennen-Einheit mit einem Einkoppel-Element und einem Reflektor zum Anschließen an den Wellenleiter und zum Ablenken des Radar-Signals in einem definierten Winkel, eine SignalerzeugungsEinheit, eine Empfangseinheit und eine Auswertungseinheit aufweist.

WO 90/13927 A1 beschreibt ein Antennensystem, welches einen Speiser und eine Linsenanordnung aufweist, durch die Strahlen von dem Speiseleiter gesendet oder von diesem empfangen werden. Der Speiser und die Linsenanordnung bestehen jeweils aus einem dielektrischen Material und können einen ankommenden Strahl fokussieren und einen ausgehenden Strahl zu einem kollimierten Strahl erzeugen.

US 3 530 481 A beschreibt eine elektromagnetische Hornantenne, die einen zylindrischen Wellenleiter zum Führen und Erregen elektromagnetischer Wellen, ein elektromagnetisches Horn mit einem Kehlteil und einem sich erweiternden Teil, eine elektromagnetische Multiplexmodus-Erzeugungseinrichtung und ein Phasensteuerungs- und Impedanzkompensierbares Mittel zum Einstellen der Phase zwischen mehreren in das Horn eingeführten Moden umfasst.

US 2007/008212 A1 beschreibt eine Antennenstruktur für eine Füllstandmessvorrichtung zum Messen eines Füllstands eines sich in einem Behälter befindlichen Materials, die eine Hornantenne, eine Emitter-Anordnung mit einem Stecker und einem Emitter, und einen Koppler zum Ankoppeln der Hornantenne an das Füllstandmessgerät umfasst.

DE 100 57 441 A1 beschreibt eine Hornantenne für ein Radargerät mit einem Antennenhohlraum, der zumindest teilweise mit einer Füllung ausgefüllt ist.

DE 199 50 429 A1 beschreibt eine gas- und druckdichte Prozesstrennung für ein Füllstandmessgerät, die einen metallen Körper mit einer zentralen Durchgangsbohrung und einen darin eingeschrumpften, keramischen Leiter umfasst.

### Zusammenfassung

Es ist eine Aufgabe der vorliegenden Erfindung, eine alternative Antennenanordnung, eine Verwendung der Antennenanordnung und ein Verfahren zur Herstellung der Antennenanordnung anzugeben.

Diese Aufgabe wird durch die Merkmale der unabhängigen Patentansprüche gelöst.

Weiterbildungen der Erfindung ergeben sich aus den abhängigen Patentansprüchen und der folgenden Beschreibung von Ausführungsformen.

Ein erster Aspekt der vorliegenden Offenbarung betrifft eine Antennenanordnung, die zum Abstrahlen eines Hochfrequenz-Messsignals eines Messsensors eingerichtet ist und eine Antenne aus einem Kunststoff und einen Wellenleiter aus dem Kunststoff aufweist. Der Wellenleiter ist mit der Antenne einstückig ausgebildet. Darüber hinaus weist die Antennenanordnung weiterhin eine Wandung an der Außenseite der Antenne auf, die eine Metallisierung aufweist.

Der Messsensor kann beispielsweise ein Füllstand-, ein Grenzstand- und/oder ein Druckmesssensor für eine Prozessanlage sein, der mit einem Hochfrequenz-Messsignal mit einer Frequenz größer als 70 GHz bzw. größer als 100 GHz arbeiten kann. Vorteilhaft kann der Messsensor mit dem Hochfrequenz-Messsignal bei der Frequenz >100GHz geringe Signaldämpfungen im Vergleich zu einem konventionellen Hohlleiter aufweisen. Darüber hinaus kann ein solcher Messsensor eine galvanische Trennung zwischen der Sensorelektronik und der Antenne aufweisen, wobei die galvanische Trennung ebenfalls als Temperaturentkopplung zwischen der Sensorelektronik und der Antenne dienen kann.

Bei der Antennenanordnung kann es sich um eine Kunststoff-Antennenanordnung handeln, die an der Außenseite partiell metallisiert sein kann. Das heißt, dass die Antennenanordnung integral mit dem Wellenleiter als ein Grundkörper ausgebildet und eine Metallbeschichtung nachträglich an der Außenseite des Abschnitts der Antenne aufgebracht sein kann.

Bei dem Wellenleiter oder Speiseleiter kann es sich um einen Kunststoff-Wellenleiter handeln, der aus einem dielektrischen Material bestehen kann. Dieser Kunststoff-Wellenleiter kann auch eine metallische Wandung aufweisen. Im Vergleich zu einem Hohlleiter kann der Wellenleiter mit dem dielektrischen Material gefüllt sein.

Der Wellenleiter kann zum Einspeisen bzw. Einkoppeln des Hochfrequenz-Messsignals aus einem Messsensor und zum Führen des Messsignals an die Antenne eingerichtet sein. Mit der einstückig ausgebildeten Antenne mit dem integrierten Wellenleiter kann vorteilhaft eine Koppelstelle zwischen der Antenne und dem Wellenleiter entfallen und somit können Reflexionen und Dämpfungen an der Koppelstelle und an dem Übergang zwischen der Antenne und dem Wellenleiter reduziert oder minimiert werden. In anderen Worten kann die Empfindlichkeit eines Messsystems, beispielweise eines Radarsystems, mit der Antennenanordnung minimiert und die Stabilität des Messsystems entsprechend verbessert werden. Dies kann insbesondere vorteilhaft für ein Messsystem mit einer hohen Arbeitsfrequenz, beispielsweise größer als 100 GHz, und mit einem relativ langen Wellenleiter mit einem relativ geringen Durchmesser sein.

Die Antennenanordnung kann partiell an der Außenseite der Antenne metallisiert sein. Die metallisierte Wandung der Antenne kann dazu dienen, dass die Störanfälligkeit durch ein Objekt, das sich in unmittelbarer Nähe zu dem Wellenleiter befindet und zu Störechos und verstärktem Antennenklingeln führen kann, reduziert oder minimiert werden kann.

Gemäß einer Ausführungsform ist die Antenne eine Hornantenne oder eine Parabolantenne.

Gemäß einer weiteren Ausführungsform ist die Antenne kegelförmig ausgebildet.

Gemäß einer Ausführungsform weist die Antennenanordnung weiterhin ein Antireflexionselement auf, das an einer Außenseite eines Übergangsbereichs zwischen der Antenne und dem Wellenleiter angeordnet und zum Reduzieren von Reflexionen des Messsignals in dem Übergangsbereich eingerichtet ist.

Durch das Ausbilden der einteiligen Antennenanordnung mit dem gefüllten Antennenhorn und des integrierten Speisewellenleiters kann der Übergang in dem Übergangsbereich zwischen dem Wellenleiter und dem Antennenhorn zur Signalübertragung optimiert werden, indem das Antireflexionselement, das in dem Übergangsbereich angeordnet sein kann, die Reflexionen des Messsignals an der Übergangsstelle weg in Richtung des Antireflexionselements wegstreuen kann.

Gemäß einer weiteren Ausführungsform ist das Antireflexionselement trichterförmig ausgebildet.

Um den Übergang zwischen dem Wellenleiter und der Antenne möglichst reflexionsarm zu realisieren, kann der metallische Trichter in dem Übergangsbereich vorgesehen sein. Gemäß einer weiteren Ausführungsform ist das Antireflexionselement ein metallischer Trichter, der partiell mit dem Kunststoff gefüllt ist.

Gemäß einer weiteren Ausführungsform ist der Kunststoff ein dielektrisches Material aus PEEK, HDPE, PTFE, PFA oder PVDF.

Da die Antenne und der Wellenleiter einteilig ausgebildet werden können, kann der Kunststoff als das dielektrische Füllmaterial der Antennenanordnung für die Antenne und den Wellenleiter identisch sein. Des Weiteren kann die Füllung des metallischen Trichters aus einem gleichen Füllmaterial bestehen.

Gemäß einer weiteren Ausführungsform weist der Kunststoff einen DK-Wert mit 2 ≤ εᵣ ≤ 5 und einen Verlustfaktor von 0,1 ≤ tan(δ) ≤ 0.00001 auf.

Der Kunststoff zum Füllen der Antennenanordnung mit der hohen Arbeitsfrequenz kann mit dem relativ geringen Wert der Dielektrizitätskonstante (DK-Wert) und des Verlustfaktors prozesstauglich für das Messgerät oder das Messsystem sein. Prozesstauglich bedeutet, dass der Kunststoff hohe Prozesstemperaturen aushalten und gegen diverse Chemikalien eine Beständigkeit aufweisen kann. Ein solcher Kunststoff kann beispielsweise ein dielektrisches Material, wie z.B. Polyetheretherketon (PEEK), Polyethylen (HDPE), Polytetrafluorethylen (PTFE), Perfluoralkoxy (PFA) oder Polyvinylidenfluorid (PVDF) sein.

Ein weiterer Aspekt betrifft ein Messgerät, welches einen Messsensor mit einem Radarchip, welcher zum Erzeugen und/oder Erfassen eines Hochfrequenz-Messsignals eingerichtet ist, und eine Antennenanordnung mit einer Antenne und einem Wellenleiter aufweist, die zum Abstrahlen des Hochfrequenz-Messsignals des Messsensors eingerichtet ist.

Das Messgerät kann ein autarkes Messgerät sein, welches eine interne Energieversorgung aufweist, wie z. B. eine Batterie, einen Akku, ein Energie-Harvesting-System oder eine Solarzelle. Ein solches Messgerät kann zur Überwachung von Füllstand-, Grenzstand- oder Druckwerten im Bereich der Prozessautomatisierung im industriellen oder privaten Umfeld wie z. B. der Logistik, vorteilhaft eingesetzt werden.

Unter dem Begriff "Prozessautomatisierung im industriellen oder privaten Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter, wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mithilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z. B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemeint ist in den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Beispielsweise kann durch die fortlaufende, automatisierte Überwachung der Füllstände in mobilen Behältern und die vorzugsweise drahtlose Übertragung der Werte an eine zentrale Auswertestelle im Bereich der Warenlogistik eine standortübergreifende Bestandsverwaltung auf einfache Art und Weise realisiert werden. Unter Verwendung der erfassten Daten können in Abhängigkeit von der jeweiligen Problemstellung signifikante Kostenreduktionen erreicht werden, wenn beispielsweise die Fahrroute für Lieferfahrzeuge zur Versorgung mit Nachschub optimiert werden kann.

Mit der einstückigen Antennenanordnung des Messgeräts kann in dem kompletten Übertragungsweg des Hochfrequenz-Messsignals nur eine einzige Kopplungsstelle vorgesehen sein, und zwar zwischen dem Radarchip und dem freien Ende des Wellenleiters oder der Speiseleitung der Antenne.

Gemäß einer Ausführungsform weist das Messgerät weiterhin ein Gehäuse auf, in dem die Antennenanordnung montiert ist. Das Gehäuse weist eine Halterung auf, die in dem Gehäuse vorgesehen und dazu eingerichtet ist, die Antennenanordnung in dem Gehäuse zu befestigen.

Die Antennenanordnung mit der Antenne und dem integrierten Wellenleiter kann vorteilhaft in dem Gehäuse bzw. dem Sensorgehäuse in vorteilhafter Weise gehalten und montiert werden, sodass der Übergang zwischen dem Wellenleiter und der Antenne zur Übertragung des Messsignals durch die Halterung optimiert werden kann.

Eine mechanische Kontaktierung des Gehäuses an den metallisierten Bereichen der Hornantenne kann keinen Einfluss auf das Hochfrequenz-Signal ausüben.

Gemäß einer weiteren Ausführungsform ist das Gehäuse dazu eingerichtet, mittels der Halterung die Antennenanordnung in dem Gehäuse derart anzuordnen, dass das Hochfrequenz-Messsignal aus dem Radarchip des Messsensors in den Wellenleiter eingekoppelt und von dem Wellenleiter zu der Antenne geführt wird.

Es kann eine Linse zwischen dem Radarchip und dem Wellenleiter der Antennenanordnung vorgesehen sein, die dazu eingerichtet sein kann, das Messsignal aus dem Radarchip des Messsensors fokussiert an den Wellenleiter anzustrahlen und das Messsignal in den Wellenleiter einzuspeisen oder einzukoppeln.

Gemäß einer weiteren Ausführungsform weist der Messsensor weiterhin eine Leiterplatte auf, auf der der Radarchip angeordnet ist. Das Gehäuse ist dazu eingerichtet, mittels der Halterung die Leiterplatte und den Radarchip direkt an einem freien Ende des Wellenleiters der Antennenanordnung anzuordnen.

Die Leiterplatte kann dazu eingerichtet sein, die Radarsignal-Quelle bzw. den Radarchip aufzunehmen und die Antennenanordnung adaptiert und unmittelbar anzuordnen. Es kann somit eine weitere Koppelstelle zwischen dem Radarchip und dem Wellenleiter der gefüllten Hornantennenanordnung entfallen und die Reflexionen während der Signalübertragung weiter zu reduzieren.

Gemäß einer weiteren Ausführungsform ist die Halterung hülsenförmig ausgebildet. Alternativ kann die Halterung in einer weiteren Form entsprechend der inneren Form des Gehäuses ausgebildet sein.

Gemäß einer Ausführungsform ist die Halterung ein Druckhalter und derart ausgebildet, dass ein Antireflexionselement der Antennenanordnung, welches an einer Außenseite eines Übergangsbereichs zwischen der Antenne und dem Wellenleiter angeordnet ist, in dem Druckhalter durchgeschoben werden kann.

Beispielsweise kann der Innendurchmesser der hülsenförmigen Halterung so groß gewählt werden, dass die trichterartige Struktur im Übergangsbereich von dem Wellenleiter zu der Hornantenne durchgeschoben werden kann.

Der Druckhalter kann beliebig lang ausgeführt sein, wenn es beispielsweise auf eine hohe Druck-Belastung der Antennenanordnung ankommt.

Gemäß einer weiteren Ausführungsform ist die Halterung in dem Gehäuse in einem vorderen Bereich der Antenne zum Haltern der Antennenanordnung vorgesehen. Alternativ ist die Halterung in dem Gehäuse in einem hinteren Bereich der Antenne zum Haltern der Antennenanordnung vorgesehen.

Alternativ kann sich der Druckhalter nur im vorderen Bereich befinden, um die Vorteile bezüglich der Übertragung auftretender Temperaturen, beispielsweise von außerhalb der Antenne, an der nachfolgenden Elektronik auszunutzen.

Gemäß einer weiteren Ausführungsform besteht die Halterung aus einem Metall oder einem Kunststoff.

Die Kontaktstelle des Druckhalters oder des Druckstücks kann im Bereich der metallisierten Antenne derart vorgesehen sein, dass das Hochfrequenz-Messsignal bei dem Übertragen in den Wellenleiter und bei dem Abstrahlen in Richtung eines Zielobjekts sowie dem Empfangen nach dem Reflektieren nicht beeinflusst werden kann.

Gemäß einer weiteren Ausführungsform ist die Arbeitsfrequenz des Hochfrequenz-Messsignals größer als 70 GHz, 120 GHz oder 200GHz.

Ein weiterer Aspekt betrifft die Verwendung einer Antennenanordnung zum Aussenden eines Hochfrequenz-Messsignals und/oder Empfangen eines reflektierten Messsignals zur Bestimmung eines Füllstands, eines Grenzstands oder eines Drucks.

Ein weiterer Aspekt betrifft die Verwendung eines Messgeräts zur Füllstandmessung, Grenzstandmessung oder Druckmessung in einer Prozessanlage.

Ein weiterer Aspekt betrifft ein Verfahren zum Herstellen einer Antennenanordnung, eingerichtet zum Abstrahlen eines Hochfrequenz-Messsignals eines Messsensors. Das Verfahren weist die Schritte auf: Bereitstellen einer Antennenanordnung mit einer Antenne und einem Wellenleiter aus einem Kunststoff durch einen Spritzgussprozess, einen Mikrospritzgussprozess, eine Pressung eines Grundkörpers oder einen 3D-Druckprozess. Der Wellenleiter ist mit der Antenne einstückig ausgebildet. Das Verfahren weist weiterhin den Schritt, Metallisieren der Außenseite der Antenne, auf, um eine Wandung an der Außenseite der Antenne auszubilden.

Gemäß einer Ausführungsform weist das Verfahren weiterhin den folgenden Schritt auf: Bereitstellen eines Antireflexionselements an einer Außenseite eines Übergangsbereichs zwischen der Antenne und dem Wellenleiter, um Reflexionen des Messsignals in dem Übergangsbereich zu reduzieren.

Bei einem Messsystem oder einem Messgerät mit einer hohen Arbeitsfrequenz kann es sein, dass die Fertigung einer trichterförmigen metallischen Hornantenne, wie sie in einem Füllstandmessgerät mit einer niedrigen Frequenz (< 100 GHz) des Messsignals vorgesehen sein kann, aufgrund einer deutlich kleineren Bauform und der langen Hornantennen technisch aufwändig sein kann, was sich negativ auf die Herstellkosten auswirken kann. Bei einer niedrigeren Frequenz kann beispielsweise die trichterförmige Hornantenne zerspanend als ein Drehteil hergestellt werden. Diese Hornantenne kann bei einer niedrigeren Frequenz oftmals mit einem gedrehten Kunststoffkegel gefüllt sein, um eine Verkürzung der Bauform und Druckfestigkeit zu erhalten. Die zerspanende Herstellung dieser Teile kann für ein Messgerät bei hohen Arbeitsfrequenzen aufgrund des geringen Durchmessers der Antenne und des Wellenleiters durch den Spritzgussprozess, den Mikrospritzgussprozess, die Pressung eines Grundkörpers oder einen 3D-Druckprozess ersetzt werden. Alternativ kann die Antenne samt dem Speisewellenleiter mechanisch durch das Drehen oder das Fräsen hergestellt werden, wenn die Arbeitsfrequenz und die damit geforderten mechanischen Abmessungsgenauigkeiten eine mechanische Bearbeitung zulassen können. Beispielsweise kann dies bei einer Frequenz von <100 GHz, insbesondere von 70 GHz bis 100 GHz, ausführbar sein. Bei sehr hohen Arbeitsfrequenzen, insbesondere >120 GHz oder >200 GHz, insbesondere 122,5 GHz eines ISM-Bands, kann sich die Anordnung durch den (Mikro-)Spritzguss, durch das Pressen des Grundkörpers der Antennenanordnung oder mittels der 3D-Druck-Technik herstellen lassen.

Somit kann die Antennenanordnung einteilig oder integral mit der Antenne und dem Wellenleiter ausgebildet sein. Das metallische Horn der Radarantenne kann durch die partielle Metallisierung des Grundkörpers ausgebildet sein. Ein mechanischer Verbund von der metallischen Wandung des Horns der Antenne und der Kunststoff-Füllung kann bereits durch die teilweise Metallisierung der Außenseite des Grundkörpers ausgeführt werden.

Die Herstellung der Hornantenne mit dem Wellenleiter kann daher sehr kostengünstig zu realisieren sein. Darüber hinaus kann ein Zusammenfügen von dem metallischen Horn der Antenne und der Füllung entfallen, da das Horn der Antenne durch die Metallisierung des Füllkegels mit einer metallischen Wandung ausgebildet sein kann.

Im Folgenden werden mit Verweis auf die Figuren Ausführungsformen der vorliegenden Offenbarung beschrieben. Werden in der Figurenbeschreibung die gleichen Bezugszeichen verwendet, so beschreiben diese gleiche oder ähnliche Elemente. Die Darstellungen in den Figuren sind schematisch und nicht maßstäblich.

### Kurze Beschreibung der Figuren

- Fig. 1a: zeigt schematisch eine Antennenanordnung gemäß einer Ausführungsform.
- Fig. 1b: zeigt schematisch eine Antennenanordnung gemäß einer weiteren Ausführungsform.
- Fig. 2a: zeigt schematisch eine Antennenanordnung gemäß einer Ausführungsform.
- Fig. 2b: zeigt schematisch eine Antennenanordnung gemäß einer weiteren Ausführungsform.
- Fig. 3a: zeigt schematisch ein Messgerät gemäß einer Ausführungsform.
- Fig. 3b: zeigt schematisch ein Messgerät gemäß einer weiteren Ausführungsform.
- Fig. 4a: zeigt schematisch ein Messgerät gemäß einer Ausführungsform.
- Fig. 4b: zeigt schematisch ein Messgerät gemäß einer weiteren Ausführungsform.
- Fig. 5a: zeigt schematisch ein Messgerät gemäß einer Ausführungsform.
- Fig. 5b: zeigt schematisch ein Messgerät gemäß einer weiteren Ausführungsform.
- Fig. 5c: zeigt schematisch ein Messgerät gemäß einer weiteren Ausführungsform.
- Fig. 6: zeigt schematisch ein Flussdiagramm eines Verfahrens zum Herstellen einer Antennenanordnung gemäß einer Ausführungsform.

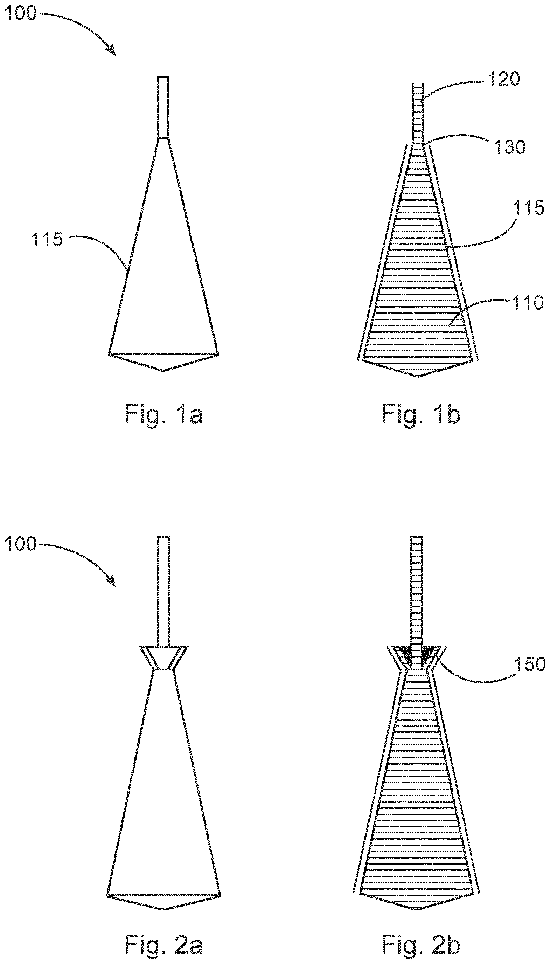

Die Figuren 1a und 1b und die damit assoziierten Ausführungsformen fallen nicht unter den Schutzumfang der Patentansprüche, werden jedoch als nützlich zum Verständnis der Erfindung erachtet.

### Detaillierte Beschreibung von Ausführungsformen

Fig. 1a und Fig. 1b zeigen jeweils schematisch eine Antennenanordnung 100, die zum Abstrahlen eines Hochfrequenz-Messsignals eines Messsensors 200 eingerichtet ist. Die Antennenanordnung umfasst eine Antenne 110 aus einem Kunststoff und einen Wellenleiter 120 aus dem Kunststoff, der mit der Antenne 110 einstückig ausgebildet ist.

Die Antennenanordnung 100 umfasst weiterhin eine Wandung 115 an der Außenseite der Antenne 110, die eine Metallisierung aufweist.

Die Antenne 110 in Fig. 1a und 1b ist eine Hornantenne. Die Antenne 110 kann kegelförmig ausgebildet sein. Alternativ kann die Antenne 110 auch eine Parabolantenne sein.

Die Antenne 110 kann mit dem Wellenleiter 120 aus demselben Kunststoff integral ausgebildet sein, wobei der Wellenleiter 120 zylindrisch ausgebildet ist. Ein Übergangsbereich 130 ist zwischen der Antenne 110 und dem Wellenleiter 120 angeordnet.

Der Kunststoff kann ein dielektrisches Material aus PEEK, HDPE, PTFE, PFA oder PVDF sein. Darüber hinaus kann der Kunststoff einen DK-Wert mit 2 ≤ εᵣ ≤ 5 und einen Verlustfaktor von 0,1 ≤ tan(δ) ≤ 0.00001 aufweisen.

Fig. 1a zeigt die metallisierte Wandung 115 an der Außenseite der Antenne 110 der Antennenanordnung 100.

Fig. 1b zeigt die Schnittansicht der Antennenanordnung 100, die eine innere Füllung aus dem Kunststoff aufweisen kann, indem die Antenne 110 und der Wellenleiter 120 einstückig aus einem gemeinsamen Kunststoff in Form der Füllung ausgebildet sein können. Somit kann die äußere Wandung 115 der Antennenanordnung 100 bis zu dem Übergangsbereich 130 partiell metallisiert sein. Die Außenseite des Wellenleiters 120 kann weiterhin ohne metallisierte Wandung aus dem Kunststoff bestehen.

Fig. 2a und Fig. 2b zeigen jeweils die Antennenanordnung 100, die weiterhin ein Antireflexionselement 150 aufweist, das an einer Außenseite eines Übergangsbereichs 130 zwischen der Antenne 110 und dem Wellenleiter 120 angeordnet ist. Das Antireflexionselement 150 ist zum Reduzieren von Reflexionen des Messsignals in dem Übergangsbereich 130 eingerichtet.

Das Antireflexionselement 150 ist trichterförmig ausgebildet.

Fig. 2a zeigt, dass das Antireflexionselement 150 ein metallischer Trichter ist. Somit kann die Antennenanordnung 100 eine metallische Wandung an der Außenseite der Antenne 110 und dem Antireflexionselement 150 aufweisen.

Fig. 2b zeigt, dass das Antireflexionselement 150 partiell mit dem Kunststoff gefüllt sein kann. Beispielsweise kann das Antireflexionselement 150 integral mit der Antenne 110 und dem Wellenleiter 120 als ein Grundkörper ausgebildet sein. Die Wandung der Antenne 110 und des Antireflexionselements 150 kann durch die partielle Metallisierung an der Außenseite des Grundkörpers ausgebildet sein, indem eine Metallbeschichtung an der Außenseite aufgebracht sein kann.

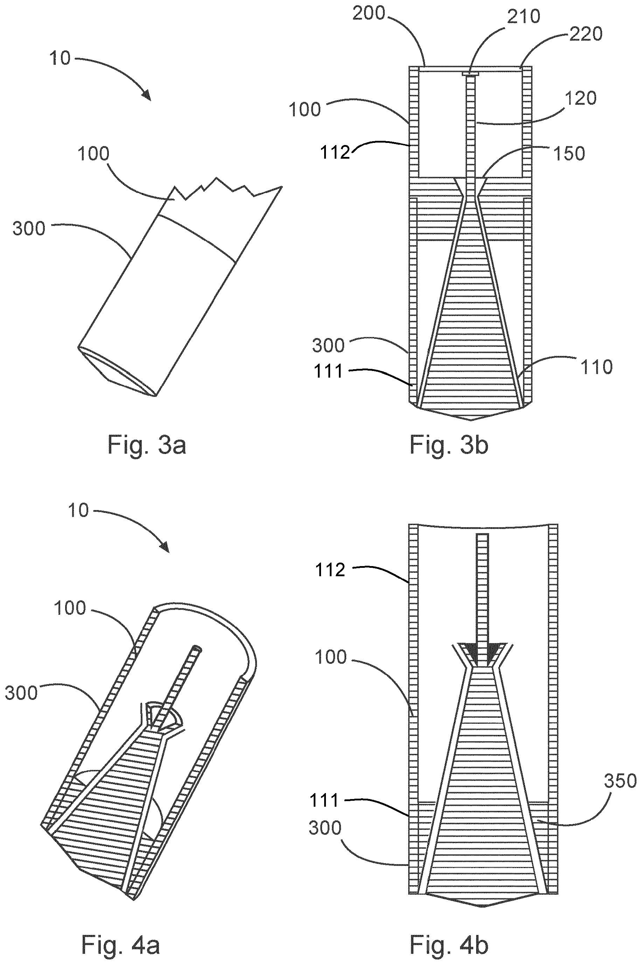

Fig. 3a zeigt ein Messgerät 10, das eine Antennenanordnung 100, einen Messsensor 200 mit einem Radarchip 210, eingerichtet zum Erzeugen und/oder Erfassen eines Hochfrequenz-Messsignals, und ein Gehäuse 300 aufweist.

Fig. 3b zeigt, dass die Antennenanordnung 100, die eine Antenne 110, einen Wellenleiter 120 und ein Antireflexionselement 150 aufweist, in dem Gehäuse 300 montiert und zum Abstrahlen des Hochfrequenz-Messsignals eingerichtet ist. Der Messsensor 200 kann weiterhin eine Leiterplatte 220 aufweisen, auf der der Radarchip 210 angeordnet sein kann.

Das Gehäuse 300 weist eine Halterung 350 auf, die in dem Gehäuse 300 vorgesehen und dazu eingerichtet ist, die Antennenanordnung 100 in dem Gehäuse 300 zu befestigen.

Das Gehäuse 300 ist dazu eingerichtet, mittels der Halterung 350 die Antennenanordnung 100 in dem Gehäuse 300 derart anzuordnen, dass das Messsignal aus dem Radarchip 210 des Messsensors 200 in den Wellenleiter 102 eingekoppelt und von dem Wellenleiter 102 zu der Antenne 101 geführt werden kann. Beispielsweise kann die Leiterplatte 220 direkt an einem freien Ende des Wellenleiters 120 der Antennenanordnung 100 angeordnet sein. Dafür kann die Leiterplatte 220 derart ausgebildet bzw. adaptiert sein, dass der Radarchip unmittelbar an dem freien Ende des Wellenleiters 120 vorgesehen sein kann. Darüber hinaus kann das Gehäuse 300 dazu eingerichtet sein, mittels der Halterung 350 die Leiterplatte 220 mit dem Radarchip 210 in dem Gehäuse zu befestigen.

Durch das unmittelbare Anordnen des Radarchips 210 des Messsensors 200 an dem Wellenleiter 120 der Antennenanordnung 100 kann im kompletten Radarsignalweg eine einzige Kopplungsstelle, und zwar zwischen dem Radarchip 210 und dem Wellenleiter 120, vorgesehen sein. Somit können vorteilhaft weitere Koppelstellen, beispielsweise zwischen dem Wellenleiter 120 und der gefüllten Hornantenne 110, entfallen und wenige Reflexionen in dem Messgerät 10 erzeugt werden.

Die Halterung kann aus einem Metall oder einem Kunststoff bestehen.

Die Halterung 350 des Gehäuses 300 kann hülsenförmig ausgebildet sein. Darüber hinaus kann die Halterung 350 einen Druckhalter aufweisen und derart ausgebildet sein, dass das Antireflexionselement 150 der Antennenanordnung 100, welches an einer Außenseite eines Übergangsbereichs 130 zwischen der Antenne 110 und dem Wellenleiter 120 angeordnet sein kann, in dem der Druckhalter durchgeschoben werden kann.

Die Halterung 350 kann, wie in Fig. 3b gezeigt, in dem Gehäuse 300 in einem hinteren Bereich 112 der Antenne 110 bzw. in dem Übergangsbereich 130 der Antennenanordnung 110 zum Haltern der Antennenanordnung 100 vorgesehen sein.

Alternativ zeigen Fig. 4a und Fig. 4b, dass die Halterung 350 in dem Gehäuse 300 in einem vorderen Bereich 111 der Antenne 110 zum Haltern der Antennenanordnung 100 vorgesehen sein kann.

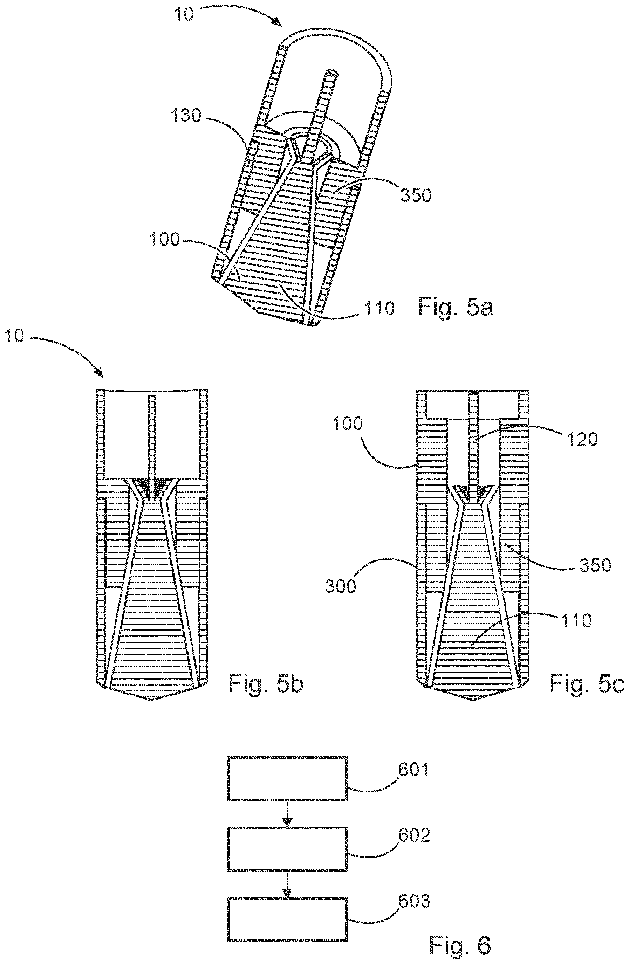

Fig. 5a, Fig. 5b und Fig. 5c zeigen weiterhin, dass die Halterung 350 derart angeordnet sein kann, dass die Kontaktstelle zwischen der Halterung 350 bzw. dem Druckhalter und der Antennenanordnung 100 in dem Übergangsbereich 130 zwischen der metallisierten Hornfüllung der Antenne 110 und dem Wellenleiter 120 das Hochfrequenz-Messsignal in dem Antennenhorn nicht beeinflussen kann. Die Halterung 350 kann in verschiedenen Längen, wie in Fig. 5a bis Fig. 5c gezeigt, ausgebildet sein.

Fig. 6 zeigt schematisch ein Flussdiagramm eines Verfahrens zum Herstellen einer Antennenanordnung 110, die zum Einkoppeln eines Hochfrequenz-Messsignals eines Messsensors 200 eingerichtet ist. Im Schritt 601 wird eine Antennenanordnung 100 mit einer Antenne 110 und einem Wellenleiter 120 aus einem Kunststoff durch einen Spritzgussprozess, einen Mikrospritzgussprozess, eine Pressung eines Grundkörpers oder einen 3D-Druckprozess bereitgestellt, wobei der Wellenleiter 120 mit der Antenne 110 einstückig ausgebildet ist. In Schritt 601 wird die Außenseite der Antenne 110 metallisiert, um eine Wandung 115 an der Außenseite der Antenne 110 auszubilden.

Darüber hinaus kann im Schritt 603 ein Antireflexionselement 150 an einer Außenseite eines Übergangsbereichs 130 zwischen der Antenne 110 und dem Wellenleiter 120 bereitgestellt werden, um Reflexionen des Messsignals in dem Übergangsbereich 130 zu reduzieren.

Hierfür kann die Antenne 110 samt dem Speisewellenleiter 120 mechanisch durch das Drehen oder das Fräsen hergestellt werden, wenn die Arbeitsfrequenz und die damit geforderten mechanischen Abmessungsgenauigkeiten eine mechanische Bearbeitung zulassen können. Beispielsweise kann dies bei einer Frequenz von <100 GHz, insbesondere von 70 GHz bis 100 GHz, ausführbar sein. Bei sehr hohen Arbeitsfrequenzen, insbesondere >120 GHz oder >200 GHz, insbesondere 122,5 GHz, kann sich die Antennenanordnung 100 beispielsweise durch den (Mikro-)Spritzguss, durch das Pressen des Grundkörpers der Antennenanordnung oder mittels der 3D-Druck-Technik herstellen lassen.

Somit kann das Ausbilden der Antennenanordnung 100 mit der Antenne 110 und dem Wellenleiter 120 einteilig ausgeführt sein. Das metallische Horn der Radarantenne 110 kann durch die partielle Metallisierung des Grundkörpers ausgebildet sein. Ein mechanischer Verbund von der metallischen Wandung 150 des Horns der Antenne 110 und der Kunststoff-Füllung kann bereits durch die teilweise Metallisierung der Außenseite des Grundkörpers ausgeführt werden.

Die Herstellung der Hornantenne 110 mit dem Wellenleiter 120 kann daher sehr kostengünstig realisieret werden. Darüber hinaus kann ein Zusammenfügen von dem metallischen Horn der Antenne 110 und der Füllung entfallen, da das Horn der Antenne durch die Metallisierung des Füllkegels mit einer metallischen Wandung 150 ausgebildet sein kann.

## Patentansprüche

1. Antennenanordnung (100), eingerichtet zum Abstrahlen eines Hochfrequenz-Messsignals eines Messsensors (200) eines Messgeräts (10), umfassend:
eine Antenne (110) aus einem Kunststoff;
einen Wellenleiter (120) aus dem Kunststoff,
wobei der Wellenleiter (120) mit der Antenne (110) einstückig ausgebildet ist;
eine Wandung (115) an der Außenseite der Antenne (110), die eine Metallisierung aufweist; und **gekennzeichnet dadurch, dass** die Antennenanordnung (100) außerdem
ein Antireflexionselement (150), das an einer Außenseite eines Übergangsbereichs (130) zwischen der Antenne (110) und dem Wellenleiter (120) angeordnet und zum Reduzieren von Reflexionen des Messsignals in dem Übergangsbereich (130) eingerichtet ist, umfasst;
wobei das Antireflexionselement (150) dazu eingerichtet ist, in einer Halterung (350), die ein Druckhalter ist, des Messgeräts (10) durchgeschoben zu werden.

2. Antennenanordnung (100) nach Anspruch 1,
wobei die Antenne (110) eine Hornantenne oder eine Parabolantenne ist.

3. Antennenanordnung (100) nach Anspruch 1 oder 2,
wobei die Antenne (110) kegelförmig ausgebildet ist.

4. Antennenanordnung (100) nach einem der vorhergehenden Ansprüche,
wobei das Antireflexionselement (150) trichterförmig ausgebildet ist.

5. Antennenanordnung (100) nach einem der vorhergehenden Ansprüche,
wobei das Antireflexionselement (150) ein metallischer Trichter ist, der partiell mit dem Kunststoff gefüllt ist.

6. Antennenanordnung (100) nach einem der vorhergehenden Ansprüche,
wobei der Kunststoff ein dielektrisches Material aus PEEK, HDPE, PTFE, PFA oder PVDF ist.

7. Antennenanordnung (100) nach einem der vorhergehenden Ansprüche,
wobei der Kunststoff einen DK-Wert mit 2 ≤ εᵣ ≤ 5 und einen Verlustfaktor von 0,00001 ≤ tan(δ) ≤ 0,1 aufweist.

8. Messgerät (10), umfassend:
einen Messsensor (200) mit einem Radarchip (210), eingerichtet zum Erzeugen und/oder Erfassen eines Hochfrequenz-Messsignals;
eine Antennenanordnung (100) nach einem der vorhergehenden Ansprüche, eingerichtet zum Abstrahlen des Hochfrequenz-Messsignals des Messsensors (200);
und ein Gehäuse (300), in dem die Antennenanordnung (100) montiert ist,
wobei das Gehäuse (300) eine Halterung (350) aufweist, die in dem Gehäuse (300) vorgesehen und dazu eingerichtet ist, die Antennenanordnung (100) in dem Gehäuse zu befestigen;
wobei die Halterung (350) ein Druckhalter ist und derart ausgebildet ist, dass ein Antireflexionselement (150) der Antennenanordnung (100), welches an einer Außenseite eines Übergangsbereichs (130) zwischen der Antenne (110) und dem Wellenleiter (120) angeordnet ist, in dem Druckhalter durchgeschoben werden kann.

9. Messgerät (10) nach Anspruch 8,
wobei das Gehäuse (300) dazu eingerichtet ist, mittels der Halterung (350) die Antennenanordnung (100) in dem Gehäuse (300) derart anzuordnen, dass das Hochfrequenz-Messsignal aus dem Radarchip (210) des Messsensors (200) in den Wellenleiter (102) eingekoppelt und von dem Wellenleiter (102) zu der Antenne (101) geführt wird.

10. Messgerät (10) nach Anspruch 8 oder 9,
wobei der Messsensor (200) weiterhin eine Leiterplatte (220) aufweist, auf der der Radarchip (210) angeordnet ist;
wobei das Gehäuse (300) dazu eingerichtet ist, mittels der Halterung (350) die Leiterplatte (220) und den Radarchip (210) direkt an einem freien Ende des Wellenleiters (120) der Antennenanordnung (100) anzuordnen.

11. Messgerät (10) nach einem der Ansprüche 8 bis 10,
wobei die Halterung (350) hülsenförmig ausgebildet ist.

12. Messgerät (10) nach einem der Ansprüche 8 bis 11,
wobei die Halterung (350) in dem Gehäuse (300) in einem vorderen Bereich (111) der Antenne (110), die kegelförmig ausgebildet ist, zum Haltern der Antennenanordnung (100) vorgesehen ist; oder
wobei die Halterung (350) in dem Gehäuse (300) in einem hinteren Bereich (112) der Antenne (110) zum Haltern der Antennenanordnung (100) vorgesehen ist.

13. Messgerät (10) nach einem der Ansprüche 8 bis 12,
wobei die Halterung (350) aus einem Metall oder einem Kunststoff besteht.

14. Messgerät (10) nach einem der Ansprüche 8 bis 13,
wobei die Arbeitsfrequenz des Hochfrequenz-Messsignals größer als 70 GHz, 120 GHz oder 200 GHz ist.

15. Verwendung einer Antennenanordnung (100) nach einem der Ansprüche 1 bis 7 zum Aussenden eines Messsignals, das ein Hochfrequenz-Messsignal ist, und/oder Empfangen eines reflektierten Messsignals zur Bestimmung eines Füllstands, eines Grenzstands oder eines Drucks.

16. Verwendung eines Messgerätes (10) nach einem der Ansprüche 8 bis 15 zur Füllstandmessung, Grenzstandmessung oder Druckmessung in einer Prozessanlage.

17. Verfahren zum Herstellen einer Antennenanordnung (100), eingerichtet zum Abstrahlen eines Hochfrequenz-Messsignals eines Messsensors (200) eines Messgeräts (10), aufweisend die Schritte:
Bereitstellen (601) einer Antennenanordnung (100) mit einer Antenne (110) und einem Wellenleiter (120) aus einem Kunststoff durch einen Spritzgussprozess, einen Mikrospritzgussprozess, eine Pressung eines Grundkörpers oder einen 3D-Druckprozess, wobei der Wellenleiter (120) mit der Antenne (110) einstückig ausgebildet ist;
Metallisieren (602) der Außenseite der Antenne (110), um eine Wandung (115) an der Außenseite der Antenne (110) auszubilden;
**gekennzeichnet durch** die Schritte:
Bereitstellen (603) eines Antireflexionselements (150) an einer Außenseite eines Übergangsbereichs (130) zwischen der Antenne (110) und dem Wellenleiter (120), um Reflexionen des Messsignals in dem Übergangsbereich (130) zu reduzieren;
Durchschieben des Antireflexionselements (150) in einer Halterung (350), die ein Druckhalter ist, des Messgeräts (10).

## Claims

1. Antenna arrangement (100), configured to radiate a high frequency measurement signal from a measurement sensor (200) of a measuring device (10), comprising:
an antenna (110) made of a plastic material;
a waveguide (120) made of the plastic material,
wherein the waveguide (120) is integrally formed with the antenna (110);
a wall (115) on the outside of the antenna (110) that has metallization or is made of metal; and **characterized in that** the antenna arrangement (100) further comprising:
an anti-reflection element (150) configured on an outer side of a transition region (130) between the antenna (110) and the waveguide (120) and configured to reduce reflections of the measurement signal in the transition region (130).
wherein the anti-reflection element (150) is configured to be slid through in a holder (350), which is a press holder, of the measuring device (10).

2. Antenna arrangement (100) according to claim 1,
wherein the antenna (110) is a horn antenna or a parabolic antenna.

3. Antenna arrangement (100) according to claim 1 or 2,
wherein the antenna (110) is cone-shaped.

4. Antenna arrangement (100) according to one of the preceding claims,
wherein the anti-reflective element (150) is funnel-shaped.

5. Antenna arrangement (100) according to one of the preceding claims,
wherein the anti-reflective element (150) is a metallic funnel partially filled with the plastic.

6. Antenna arrangement (100) according to any one of the preceding claims,
wherein the plastic is a dielectric material of PEEK, HDPE, PTFE, PFA or PVDF.

7. Antenna arrangement (100) according to any one of the preceding claims,
wherein the plastic has a DK value of 2 ≤ εᵣ ≤ 5 and a loss factor of 0.00001 ≤ tan(δ) ≤ 0.1.

8. Measuring device (10), comprising:
a measurement sensor (200) comprising a radar chip (210) configured to generate and/or detect a radio frequency measurement signal;
an antenna arrangement (100) according to one of the preceding claims, configured to radiate the high frequency measurement signal from the measurement sensor (200);
a housing (300) in which the antenna arrangement (100) is mounted,
wherein the housing (300) comprises a bracket (350) provided in the housing (300) and configured to secure the antenna assembly (100) in the housing;
wherein the holder (350) is a press holder and is formed such that an anti-reflection element (150) of the antenna arrangement (100), which is arranged on an outer side of a transition region (130) between the antenna (110) and the waveguide (120), can be slid through in the press holder.

9. Measuring device (10) according to claim 8,
wherein the housing (300) is configured to arrange the antenna arrangement (100) in the housing (300) by means of the holder (350) in such a way that the high-frequency measurement signal from the radar chip (210) of the measurement sensor (200) is coupled into the waveguide (102) and guided from the waveguide (102) to the antenna (101).

10. Measuring device (10) according to claim 8 or 9,
wherein the measurement sensor (200) further comprises a printed circuit board (220) on which the radar chip (210) is arranged;
wherein the housing (300) is configured to directly mount the circuit board (220) and the radar chip (210) to a free end of the waveguide (120) of the antenna arrangement (100) by means of the bracket (350).

11. Measuring device (10) according to any one of claims 8 to 10,
wherein the holder (350) is sleeve-shaped.

12. Measuring device (10) according to any one of claims 8 to 11,
wherein the holding (350) is provided in the housing (300) in a front portion (111) of the antenna (110), which is cone-shaped, for holding the antenna assembly (100); or
wherein the holding (350) is provided in the housing (300) in a rear portion (112) of the antenna (110) for holding the antenna assembly (100).

13. Measuring device (10) according to any one of claims 8 to 12,
wherein the holder (350) is made of a metal or a plastic.

14. Measuring device (10) according to any one of the claims 8 to 13,
wherein the operating frequency of the high frequency measurement signal is greater than 70 GHz, 120 GHz or 200 GHz.

15. Use of an antenna arrangement (100) according to any one of claims 1 to 7 for transmitting a measurement signal which is a high frequency measurement signal and/or receiving a reflected measurement signal for determining a level, a limit level or a pressure.

16. Use of a measuring device (10) according to any one of claims 8 to 15 for level measurement, limit level measurement or pressure measurement in a process plant.

17. Method of manufacturing an antenna arrangement (100) configured to radiate a radio frequency measurement signal from a measurement sensor (200) of a measuring device (10), comprising the steps of:
Providing (601) an antenna arrangement (100) having an antenna (110) and a waveguide (120) made of a plastic by an injection molding process, a micro injection molding process, a compression molding of a base body, or a 3D printing process, wherein the waveguide (120) is integrally formed with the antenna (110);
Metallizing (602) the exterior of the antenna (110) to form a wall (115) on the exterior of the antenna (110);
**Characterized in** the steps:
Providing (603) an anti-reflection element (150) on an outside of a transition region (130) between the antenna (110) and the waveguide (120) to reduce reflections of the measurement signal in the transition region (130);
Sliding the anti-reflection element (150) in a holder (350), which is a press holder, of the measuring device (10).

## Revendications

1. Ensemble antenne (100), apte à émettre un signal de mesure haute fréquence d'un capteur de mesure (200) d'un appareil de mesure (10), comprenant :
une antenne (110) réalisée d'une matière plastique ;
un guide d'ondes (120) réalisé de la matière plastique,
le guide d'ondes (120) étant réalisé d'une seule pièce avec l'antenne (110) ;
une paroi (115) sur le côté extérieur de l'antenne (110), qui présente une métallisation ; et
**caractérisé en ce que**
l'ensemble antenne (100) comprend en outre un élément antiréfléchissant (150) qui est disposé sur un côté extérieur d'une zone de transition (130) entre l'antenne (110) et le guide d'ondes (120) et apte à réduire les réflexions du signal de mesure dans la zone de transition (130) ;
l'élément antiréfléchissant (150) étant apte à être glissé dans un support (350), qui est un élément de maintien de pression, de l'appareil de mesure (10).

2. Ensemble antenne (100) selon la revendication 1,
dans lequel l'antenne (110) est une antenne à cornet ou une antenne parabolique.

3. Ensemble antenne (100) selon la revendication 1 ou 2, dans lequel l'antenne (110) est réalisée en forme de cône.

4. Ensemble antenne (100) selon l'une des revendications précédentes,
dans lequel l'élément antiréfléchissant (150) est réalisé en forme d'entonnoir.

5. Ensemble antenne (100) selon l'une des revendications précédentes,
dans lequel l'élément antiréfléchissant (150) est un entonnoir métallique partiellement rempli de la matière plastique.

6. Ensemble antenne (100) selon l'une des revendications précédentes,
dans lequel la matière plastique est un matériau diélectrique en PEEK, HDPE, PTFE, PFA ou PVDF.

7. Ensemble antenne (100) selon l'une des revendications précédentes,
dans lequel la matière plastique présente une constante diélectrique 2 ≤ εᵣ ≤ 5 et un facteur de perte 0,00001 ≤ tan (δ) ≤ 0,1.

8. Appareil de mesure (10), comprenant :
un capteur de mesure (200) doté d'une puce radar (210), apte à générer et/ou à détecter un signal de mesure haute fréquence ;
un ensemble antenne (100) selon l'une des revendications précédentes, apte à émettre le signal de mesure haute fréquence du capteur de mesure (200) ;
et un boîtier (300) dans lequel l'ensemble antenne (100) est monté,
dans lequel le boîtier (300) présente un support (350) qui est prévu dans le boîtier (300) et apte à fixer l'ensemble antenne (100) dans le boîtier ;
dans lequel le support (350) est un élément de maintien de pression et est réalisé de telle sorte qu'un élément antiréfléchissant (150) de l'ensemble antenne (100), qui est disposé sur un côté extérieur d'une zone de transition (130) entre l'antenne (110) et le guide d'ondes (120), peut être glissé dans l'élément de maintien de pression.

9. Appareil de mesure (10) selon la revendication 8,
dans lequel le boîtier (300) est apte à disposer l'ensemble antenne (100) dans le boîtier (300) au moyen du support (350) de telle sorte que le signal de mesure haute fréquence provenant de la puce radar (210) du capteur de mesure (200) soit injecté dans le guide d'ondes (102) et guidé par le guide d'ondes (102) vers l'antenne (101).

10. Appareil de mesure (10) selon la revendication 8 ou 9,
dans lequel le capteur de mesure (200) présente en outre une carte de circuit imprimé (220) sur laquelle la puce radar (210) est disposée ;
dans lequel le boîtier (300) est apte à disposer, au moyen du support (350), la carte de circuit imprimé (220) et la puce radar (210) directement à une extrémité libre du guide d'ondes (120) de l'ensemble antenne (100).

11. Appareil de mesure (10) selon l'une des revendications 8 à 10,
dans lequel le support (350) est réalisé en forme de manchon.

12. Appareil de mesure (10) selon l'une des revendications 8 à 11,
dans lequel le support (350) est prévu dans le boîtier (300) pour supporter l'ensemble antenne (100) dans une zone avant (111) de l'antenne (110) qui est réalisée en forme de cône ; ou
dans lequel le support (350) est prévu dans le boîtier (300) pour supporter l'ensemble antenne (100) dans une zone arrière (112) de l'antenne (110).

13. Appareil de mesure (10) selon l'une des revendications 8 à 12,
dans lequel le support (350) est réalisé d'un métal ou d'une matière plastique.

14. Appareil de mesure (10) selon l'une des revendications 8 à 13,
dans lequel la fréquence de travail du signal de mesure haute fréquence est supérieure à 70 GHz, 120 GHz ou 200 GHz.

15. Utilisation d'un ensemble antenne (100) selon l'une des revendications 1 à 7 pour émettre un signal de mesure qui est un signal de mesure haute fréquence et/ou recevoir un signal de mesure réfléchi pour déterminer un niveau de remplissage, un niveau limite ou une pression.

16. Utilisation d'un appareil de mesure (10) selon l'une des revendications 8 à 15 pour la mesure de niveau de remplissage, la mesure de niveau limite ou la mesure de pression dans une installation industrielle.

17. Procédé de fabrication d'un ensemble antenne (100) apte à émettre un signal de mesure haute fréquence d'un capteur de mesure (200) d'un appareil de mesure (10), présentant les étapes de :
fournir (601) un ensemble antenne (100) comprenant une antenne (110) et un guide d'ondes (120) réalisés d'une matière plastique par un processus de moulage par injection, un processus de micro-moulage par injection, un pressage d'un corps de base ou un processus d'impression 3D, le guide d'ondes (120) étant réalisé d'une seule pièce avec l'antenne (110) ;
métalliser (602) le côté extérieur de l'antenne (110) pour former une paroi (115) sur le côté extérieur de l'antenne (110) ;
**caractérisé par** les étapes de :
fournir (603) un élément antiréfléchissant (150) sur un côté extérieur d'une zone de transition (130) entre l'antenne (110) et le guide d'ondes (120) afin de réduire les réflexions du signal de mesure dans la zone de transition (130) ;
glisser l'élément antiréfléchissant (150) dans un support (350), qui est un élément de maintien de pression, de l'appareil de mesure (10).
